# EUROPEAN PATENT SPECIFICATION

(11) **EP 3 559 119 B1**
(45) Date of publication and mention of the grant of the patent: **09.08.2023**
(21) Application number: 17825823.2
(22) Date of filing: 19.12.2017
(51) Int. Cl.: C08L 95/00, C08L 25/10, C08L 53/02, C08K 3/32, C08L 91/00

(54) **USE OF POLYPHOSPHORIC ACID (PPA) AND/OR OIL AS MIXING TIME REDUCING ADDITIVE FOR OBTAINING BITUMEN/BLOCK COPOLYMER MIXES.**
VERWENDUNG VON POLYPHOSPHORSÄURE (PPA) UND/ODER VON ÖL ALS MISCHZEITREDUZIERENDES ADDITIV ZUR HERSTELLUNG VON BITUMEN/BLOCKCOPOLYMERMISCHUNGEN
UTILISATION D'ACIDE POLYPHOSPHORIQUE (PPA) ET/OU D'HUILE COMME ADDITIF RÉDUCTEUR DE TEMPS DE MÉLANGE POUR OBTENIR DES MÉLANGES BITUME/COPOLYMÈRE BLOC

(30) Priority: 21.12.2016 IN 201641043661
(43) Date of publication of application: 30.10.2019
(73) Proprietor: Shell Internationale Research Maatschappij B.V., 2596 HR The Hague (NL)
(72) Inventor: HANUMANTHGARI, Raghu, Bangalore North 562149 (IN)
(74) Representative: Shell Legal Services IP
(86) International application number: PCT/EP2017/083479
(87) International publication number: WO 2018/114907

(56) References cited:
- WO-A1-2015/170739
- Anonymous: "Polyphosphoric Acid Modification of Asphalt Binders, E-C160", Transportation Research Circular January 2012, 8 April 2009 (2009-04-08), pages 1-172, XP055066169, Retrieved from the Internet: URL:www.tbr.org [retrieved on 2013-06-11]
- Robert N. Hunter ET AL: "The Shell Bitumen Handbook, sixt edition" In: "The Shell Bitumen Handbook, sixt edition", 1 January 2015 (2015-01-01), ICE Publishing, Westminster, London, UK, XP055459540, ISBN: 978-0-7277-5837-8 pages 165-166, the whole document
- Jim May ET AL: "Heating, Mixing and Storing Modified Asphalt, Technical Paper T-133", , 1 January 1996 (1996-01-01), pages 1-24, XP055459543, Chattanooga, Tennessee, USA Retrieved from the Internet: URL:http://www.heatec.com/literature/techn ical/T-133.pdf [retrieved on 2018-03-15]
- X. Lu ET AL: "SBS Modified Bitumens: Does Their Morphology and Storage Stability Influence Asphalt Mix Performance?", , 12 April 2010 (2010-04-12), pages 1-10, XP055459550, Retrieved from the Internet: URL:http://data.abacus.hr/h-a-d/radovi_s_k ongresa/nagoya_japan_2010/90227.pdf [retrieved on 2018-03-15]
- Szabolcs Biro ET AL: "Asphalt rubber versus other modified bitumens", ROAD MATERIALS AND PAVEMENT DESIGN, Vol X, 1 October 2015 (2015-10-01), pages 1-17, XP055458455, Abingdon DOI: 10.1080/14680629.2015.1004865 Retrieved from the Internet: URL:http://ra-foundation.org/wp-content/up loads/2013/02/020-PAP_017.pdf [retrieved on 2018-03-12]
- Mônica Fernandes ET AL: "Rheological evaluation of polymer-modified asphalt binders", Materials Research, 1 September 2008 (2008-09-01), pages 381-386, XP055458725, DOI: 10.1590/S1516-14392008000300024 Retrieved from the Internet: URL:http://www.scielo.br/pdf/mr/v11n3/24.p df [retrieved on 2018-03-13]

## Description

### Field of the Invention

This invention relates to the use of an additive for reducing the preparation time of preparing a partially hydrogenated polymer-modified bitumen composition.

### Background of the Invention

Bitumen is used as a binder in road asphalt mixtures, and has developed continually to meet ever-increasing performance demands from road building constructors. In general bitumen performs well in road asphalt, but increasingly heavy traffic loads and high traffic volume have led to the wear of many roads through rutting and cracking of the surface.

In their article entitled "Polymer modification of bitumen: Advances and challenges", published in May 2014 in the European Polymer Journal, volume 54, pages 18-38, J. Zhu et al. describe the modification of bitumen with polymers. By polymer modification of bitumen is herein understood to mean the incorporation of polymers in bitumen, for example by mechanical mixing or by chemical reaction. According to J. Zhu et al. polymer modification is reported to lead to improved properties, such as higher stiffness at high temperatures, a higher cracking resistance at low temperatures, a better moisture resistance and/or a longer fatigue life. J. Zhu et al, however, indicated that in addition to the reported advantages, researchers also encountered various challenges, including high costs and poor storage stability.

WO2015/170739 describes an asphalt composition used for e.g. road surfacing containing 0.5 to 20 parts mass of a block copolymer and 100 parts mass of asphalt. The block copolymer comprises a polymer block (A) containing 20-60% mass vinyl aromatic monomer units as main component, and copolymer block (B) containing conjugated diene monomer units and vinyl aromatic monomer units. The content of copolymer block (A) in the block copolymer is 10-40% mass. The hydrogenation rate of double bonds in the conjugated diene monomer units of the block copolymer is 40-100%.

It would be an advancement in the art to provide a process for producing a partially hydrogenated polymer-modified bitumen that allows for a significant reduction in the preparation time of the partially hydrogenated polymer-modified bitumen as well as obtaining a high softening point, whilst maintaining good storage stability, good road application properties and good rutting and cracking properties.

### Summary of the Invention

According to the present invention there is provided the use of an additive for reducing the preparation time of a partially hydrogenated polymer-modified bitumen composition in a process which comprises blending:
(a) from 0.5 to 5 wt%, by weight of the polymer-modified bitumen composition, of a partially hydrogenated block copolymer;
(b) from 85.0 wt% to 99.4 wt%, based on the total weight of the polymer-modified bitumen composition, of a bitumen component;
(c) from 0.1 to 10 wt%, by weight of the polymer-modified bitumen composition, of an additive, wherein the additive is polyphosphoric acid; and
(d) optionally one or more additional components;
wherein the partially hydrogenated block copolymer comprises a polymer block (A) comprising vinyl aromatic monomer units as main component, and a copolymer block (B) comprising conjugated diene monomer units and vinyl aromatic monomer units, wherein the content of the vinyl aromatic monomer units in the block copolymer is in the range from 20 to 60 mass%, the content of the copolymer block (A) in the block copolymer is in the range from 10 to 40 mass% and the hydrogenation rate of double bonds in the conjugated diene monomer units of the block copolymer is in the range from 60 to 90%.

The use of the additive described herein surprisingly leads to a reduction in the time taken to prepare a partially hydrogenated polymer-modified bitumen using the process described herein.

### Brief Description of the Drawings

Figure 1 is a plot of the results shown in Table 1
Figure 2 is a plot of the results shown in Table 2
Figure 3 is a plot of the results shown in Table 3
Figure 4 is a plot of the results shown in Table 4.

### Detailed Description of the Invention

The process herein comprises blending together components (a), (b), (c) and optionally (d).

Component (a) is a partially hydrogenated block copolymer. In the process herein, the partially hydrogenated block copolymer is used at a level of from 0.5 to 5 wt%, by weight of the polymer-modified bitumen composition. Preferably, the block copolymer is present in an amount of from 1 wt% to 5 wt%, preferably from 1.5 wt% to 4 wt%, even more preferably from 2 wt% to 3.5 wt%, by weight of the polymer-modified bitumen composition.

The block copolymer for use herein preferably comprises at least one polymer block derived from a vinyl aromatic hydrocarbon monomer and at least one polymer block derived from a conjugated diene monomer. The block copolymer may be linear or radial, symmetric or asymmetric, and may have a structure represented by the formula A-B, A-B-A, B-A-B, A-B-A-B etc. wherein A is the polymer block of a vinyl aromatic hydrocarbon and B is polymer block of a conjugated diene.

The vinyl aromatic hydrocarbon is preferably styrene, o-methylstyrene, *p*-methylstyrene, *p*-tert-butylstyrene, 1,3-dimethylstyrene, α-methylstyrene, vinylnaphthalene or vinylanthracene, most preferably styrene. Mixtures of vinyl aromatic hydrocarbons may be used.

The conjugated diene preferably has from 4 to 8 carbon atoms, and is more preferably selected from 1,3-butadiene, 2-methyl-1,3-butadiene (isoprene), 2,3-dimethyl-1,3-butadiene, 1,3-pentadiene, and 1,3-hexadiene. Most preferably the conjugated diene is 1,3-butadiene or isoprene. Mixtures of conjugated dienes may be used.

The block copolymer is partially hydrogenated which means that a certain percentage of the double bonds in the conjugated diene moieties are hydrogenated. The block copolymer is from 60 to 90 wt% hydrogenated.

Examples of suitable partially hydrogenated block copolymers for use herein include a partially hydrogenated styrene-*β*-isoprene polymer (SEP), a partially hydrogenated styrene-*β*-isoprene-*β*-styrene polymer (SEPS), a partially hydrogenated styreneisoprene-styrene polymer (SIS), a partially hydrogenated styrene-*β*-butadiene-*β*-styrene copolymer (SEBS), and a partially hydrogenated styrene-*β*-isoprene/butadiene-*β-*styrene copolymer (SEEPS).

The block copolymer comprises a polymer block (A) comprising vinyl aromatic monomer units as main component, and copolymer block (B) comprising conjugated diene monomer units and vinyl aromatic monomer units, wherein the content of the vinyl aromatic monomer units in the block copolymer is in the range from 20 to 60 mass%, the content of the copolymer block (A) in the block copolymer is in the range from 10 to 40 mass% and the hydrogenation rate of double bonds in the conjugated diene monomer units of the block copolymer is in the range from 60 to 90%. Polymers of this type are disclosed in WO2015/170739.

The weight average molecular weight of the block copolymer for use herein is preferably in the range of from 50,000 to 300,000.

In a preferred embodiment herein the block copolymer has at least one type of functional group selected from hydroxyl groups, acid anhydride groups, epoxy groups, amino groups, amide groups, silanol groups and alkoxysilane groups.

Component (b) is a bitumen component. The bitumen component used in the process of the present invention may be a residue from the distillation of crude oil, a cracked residue, naturally occurring bitumen or a blend of various bitumen types. Examples of bitumen that may be conveniently used in the present invention include distillation or "straight run" bitumen, precipitation bitumen, e.g. propane bitumen, oxidized or blown bitumen, naphthenic bitumen, paraffinic bitumen or mixtures thereof.

Various grades of bitumen may be used in the process of producing the polymer-modified bitumen described herein, such as, for example, 35/50, 50/70, 60/70, 70/100, 80/100, 100/150, 160/220 grades.

The bitumen component is present in the polymer-modified bitumen composition at a level of from 85 wt% to 99.4 wt%, preferably from 90 wt% to 95 wt%, based on the total weight of the polymer-modified bitumen.

Component (c) is an additive wherein the additive is polyphosphoric acid.

Component (c) is used at a level of from 0.1 wt% to 10 wt%, preferably from 0.1 wt% to 5 wt%, more preferably from 0.5 wt% to 5 wt%, and even more preferably from 0.5 to 2 wt%, by weight of the polymer-modified bitumen composition.

Polyphosphoric acid (PPA) is a polymeric product of thermal dehydration and polycondensation of orthophosphoric acid (H₃PO₄). Besides orthophosphoric forms, it contains a mixture of polymeric forms whose content increases with increasing acid concentration. Commercially available PPA is a mixture of linear polyacids of general formula Hₙ₊₂PₙO₃ₙ₊₁, wherein n≥2. Those acids are produced either from the dehydration of H₃PO₄ at high temperatures or by heating P₂O₅ dispersed in H₃PO₄. In the latter method, longer chains are obtained. Polyphosphoric acid is highly hydroscopic and easily hydrolyses in moist air. Its viscosity and physical form at room temperature depends on the content of P₂O₅. Polyphosphoric acid is available in various grades, for example, concentrations of 105, 110 and 114% H₃PO₄ are used (the % exceeds 100% since it reflects the calculation of H₃PO₄ concentration on the base of P₂O₅ content in the inorganic polymer). 105%, 110% and 114% H₃PO₄ is equivalent to 75.9%, 79.8% and 82.6% P₂O₅, respectively.

A preferred level of polyphosphoric acid is 0.5 to 5 wt%, by weight of the polymer-modified bitumen composition.

The polymer-modified bitumen composition may also comprise one or more additional components (d) suitable for use in a bitumen formulation. Such additional components are well known to those skilled in the art and include, for example, waxes, anti-stripping agents, viscosity modifiers, penetration correctors (for example, Gilsonite), softening agents, process oils, GTL oils, aromatic oils, paraffinic oils, and petroleum distillates, and the like.

During preparation of the polymer-modified bitumen composition, high shear mixing is preferably used for blending of components (a), (b), (c) and optionally (d). As used herein, the term "high shear mixing" means mixing at a speed from 1500 to 6000, preferably 3000 to 6000, even more preferably from 4000 to 6000 rpm. Preferably, high shear mixing involves the use of a Silverson high shear mixer.

The use of an additive component (c) enables a reduction in the time taken for the production of a partially-hydrogenated polymer-modified bitumen using the process described herein. Preferably, the time taken to produce the polymer-modified bitumen is reduced by at least 30%, preferably at least 50%, more preferably at least 60%, even more preferably at least 70%, especially at least 80%, compared with the time taken to produce a polymer-modified bitumen in an analogous process which doesn't include the use of an additive component (c).

In a preferred embodiment, the blending of components (a), (b), (c) and optionally (d) in the process herein is carried out at a temperature of less than 180°C, preferably less than 170°C, more preferably less than 165°C. The use of additive (c) enables the process of preparing the polymer-modified bitumen composition to be carried out at a lower temperature compared to the temperature used in an analogous process which does not use additive (c).

The softening point of the polymer-modified bitumen is preferably 60°C or greater, more preferably 70°C or greater, even more preferably 80°C or greater, especially 90°C or greater.

The final polymer-modified bitumen composition should meet the desired polymer-modified bitumen specification.

The final polymer-modified bitumen composition produced herein can be used as a binder in an asphalt composition for road paving applications.

The invention is further illustrated by the following non-limiting examples.

### Examples

Various polymer-modified bitumen compositions were produced by blending a bitumen component, a polymer and polyphosphoric acid using a Silverson high shear mixer.

The bitumen grades used were 60/70 (from Bahrain Petroleum Company), 60/70 (from Shell Eastern Petroleum Limited), 80/100, and 70/100. The polymer was a partially hydrogenated polymer as disclosed and prepared in WO2015/170739.

Tables 1 to 4 set out the grades of bitumen and the levels of each component, as well as mixing times, mixing temperatures and softening points measured at various intervals in the production process. For each of the polymer-modified bitumen compositions produced, the softening points were measured at various intervals (mixing times) using the EN 1427-2015 test method. The polymer-modified bitumen compositions are deemed to be stable when the change in softening point stabilizes.

**Table 1**

| Bitumen grade | Polymer (wt%) | PPA (wt%) | Softening Point (°C) | Mixing time (mins) | Mixing temperature (°C) |
|---|---|---|---|---|---|
| 60/70 (from Bahrain Petroleum Company) | 3 | 0.5 | 94 | 30 | 180 |
| | | | 94.2 | 60 | 180 |
| | | | 93.8 | 90 | 180 |
| 60/70 | 2.5 | 0.5 | 86 | 30 | 180 |
| | | | 86.2 | 60 | 180 |
| | | | 86.2 | 90 | 180 |
| 60/70 | 3.5 | 0 | 62 | 60 | 180 |
| | | | 69 | 120 | 180 |
| | | | 73.4 | 180 | 180 |
| 60/70 | 2 | 0.4 | 56 | 30 | 180 |
| 60/70 | 2.2 | 0.4 | 73.8 | 30 | 180 |
| 60/70 | 2.5 | 0.4 | 84.6 | 30 | 180 |
| 60/70 | 2.7 | 0.4 | 89.4 | 30 | 180 |
| 60/70 | 3 | 0.5 | 94 | 30 | 180 |
| 60/70 | 2.5 | 0.5 | 85 | 30 | 165 |
| | | | 86 | 60 | 165 |
| | | | 86.2 | 90 | 165 |

**Table 2**

| Bitumen grade | Polymer (wt%) | PPA (wt%) | Softening point (°C) | Mixing time (mins) | Mixing temperature °C |
|---|---|---|---|---|---|
| 60/70 (from Shell Eastern Petroleum | 3.5 | 0 | 72.4 | 60 | 180 |
| Limited) | | | | | |
| | | | 84.5 | 120 | 180 |
| | | | 89.2 | 180 | 180 |
| 60/70 | 3 | 0.5 | 86.6 | 30 | 180 |
| | | | 88.8 | 60 | 180 |
| | | | 90.5 | 90 | 180 |
| 60/70 | 3 | 0.5 | 85.2 | 30 | 165 |
| | | | 87 | 60 | 165 |
| | | | 92 | 90 | 165 |

**Table 3**

| Bitumen grade | Polymer (wt%) | PPA (wt%) | Softening point (°C) | Mixing time (mins) | Mixing temperature °C |
|---|---|---|---|---|---|
| 80/100 (from Argentina) | 3.5 | 0 | 64.4 | 60 | 180 |
| | | | 69.4 | 120 | 180 |
| | | | 67.1 | 180 | 180 |
| | | | 67 | 240 | 180 |
| 80/100 | 2.5 | 1 | 91 | 30 | 180 |
| | | | 92.4 | 60 | 180 |
| | | | 92.2 | 90 | 180 |
| 80/100 | 2.2 | 1 | 86 | 30 | 180 |
| | | | 86.4 | 60 | 180 |
| | | | 86.2 | 90 | 180 |
| 80/100 | 3 | 0.5 | 99.8 | 60 | 180 |
| | | | 100.8 | 120 | 180 |
| | | | 101 | 180 | 180 |

**Table 4**

| Bitumen grade | Polymer (wt%) | PPA (wt%) | Softening point (°C) | Mixing time (mins) | Mixing temperature °C |
|---|---|---|---|---|---|
| 70/100 | 3.5 | 0 | 65.8 | 60 | 180 |
| (from Godorf refinery Germany) | | | | | |
| | | | 80.8 | 120 | 180 |
| | | | 89.6 | 180 | 180 |
| | | | 90.4 | 240 | 180 |
| | | | 90.1 | 270 | 180 |
| 70/100 | 2 | 0.5 | 82.2 | 30 | 180 |
| | | | 82.2 | 60 | 180 |
| | | | 82.6 | 90 | 180 |
| 70/100 | 2.5 | 0.5 | 90.4 | 30 | 180 |
| | | | 91.4 | 60 | 180 |
| | | | 91.6 | 90 | 180 |
| 70/100 | 2.5 | | 62 | 60 | 180 |
| | | | 71 | 120 | 180 |
| | | | 78.8 | 180 | 180 |
| 70/100 | 2 | 0.5 | 80 | 30 | 180 |
| | | | 82 | 60 | 180 |
| | | | 82.4 | 90 | 180 |

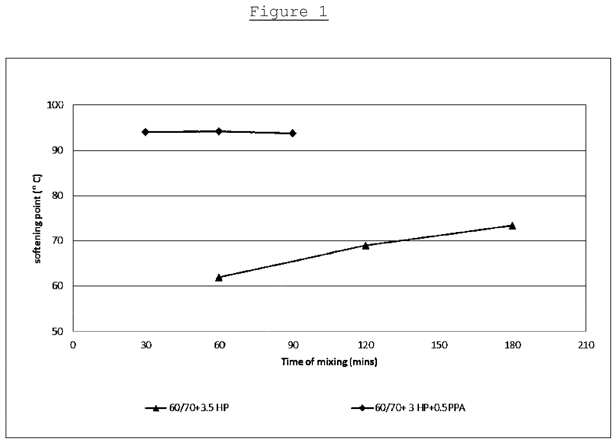

Figure 1 is a plot of the softening point against the mixing time results shown in Table 1.

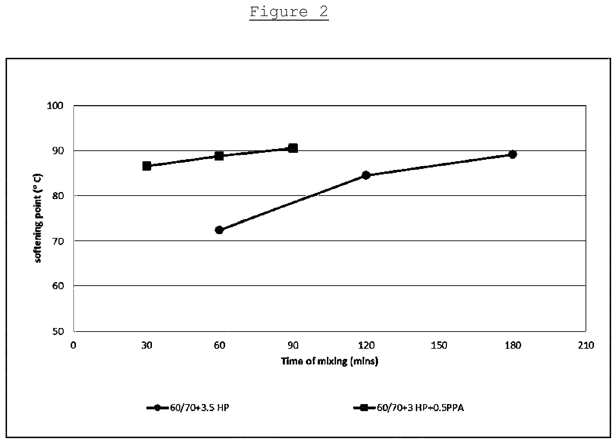

Figure 2 is a plot of the softening point against the mixing time results shown in Table 2

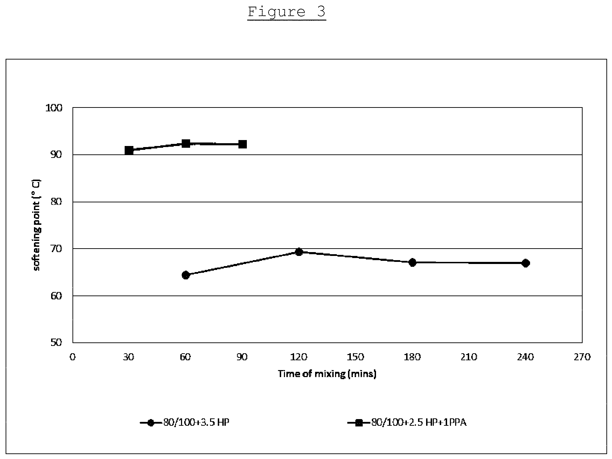

Figure 3 is a plot of the softening point against the mixing time results shown in Table 3

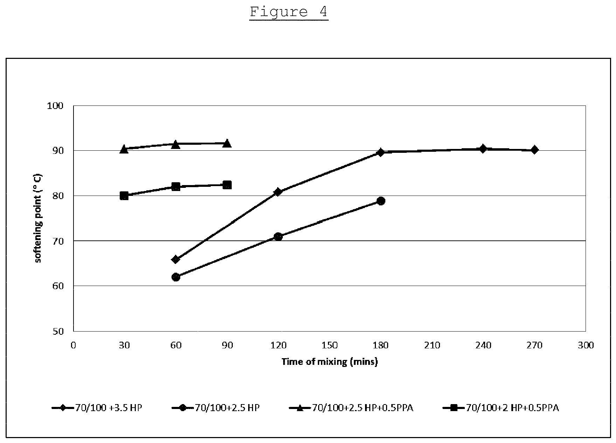

Figure 4 is a plot of the softening point against the mixing time results shown in Table 4.

In Figures 1-4, "HP" means "hydrogenated polymer".

### Discussion

The results shown in Tables 1-4 and Figures 1-4 show that the use of PPA helps to significantly reduce the time taken to make a stable polymer-modified bitumen composition comprising a partially hydrogenated polymer.

## Claims

1. Use of an additive for reducing the preparation time of a partially hydrogenated polymer-modified bitumen composition in a process which comprises blending:
(a) from 0.5 to 5 wt%, by weight of the polymer-modified bitumen composition, of a partially hydrogenated block copolymer;
(b) from 85.0 wt% to 99.4 wt%, based on the total weight of the polymer-modified bitumen composition, of a bitumen component;
(c) from 0.1 to 10 wt%, by weight of the polymer-modified bitumen composition, of an additive, wherein the additive is polyphosphoric acid; and
(d) optionally one or more additional components;
wherein the partially hydrogenated block copolymer comprises a polymer block (A) comprising vinyl aromatic monomer units as main component, and a copolymer block (B) comprising conjugated diene monomer units and vinyl aromatic monomer units, wherein the content of the vinyl aromatic monomer units in the block copolymer is in the range from 20 to 60 mass%, the content of the copolymer block (A) in the block copolymer is in the range from 10 to 40 mass% and the hydrogenation rate of double bonds in the conjugated diene monomer units of the block copolymer is in the range from 60 to 90%.

2. Use according to Claim 1 wherein the blending takes place at a temperature of less than 180°C.

3. Use according to Claim 1 or 2 wherein the blending takes place at a temperature of less than 170°C.

4. Use according to any of Claims 1 to 3 wherein the blending takes place at a temperature of less than 165°C.

5. Use according to any of Claims 1 to 4 wherein the partially hydrogenated block copolymer has a weight average molecular weight in the range from 50,000 to 300,000.

6. Use according to any of Claims 1 to 5 wherein the block copolymer has at least one type of functional group selected from hydroxyl groups, acid anhydride groups, epoxy groups, amino groups, amide groups, silanol groups and alkoxysilane groups.

7. Use according to any of Claims 1 to 6 wherein the content of conjugated diene monomer units (a) derived from 1,2-bonds and/or 3,4-bonds is in the range from 10 to 50 mass% relative to the total content of the conjugated diene monomer of the block copolymer.

## Patentansprüche

1. Verwendung eines Additivs zum Verringern der Vorbereitungszeit einer teilweise hydrierten polymermodifizierten Bitumenzusammensetzung in einem Verfahren, das ein Mischen umfasst:
(a) von 0,5 bis 5 Gew.-%, bezogen auf ein Gewicht der polymermodifizierten Bitumenzusammensetzung, ein teilweise hydriertes Blockcopolymer;
(b) von 85,0 Gew.-% bis 99,4 Gew.-%, basierend auf dem Gesamtgewicht der polymermodifizierten Bitumenzusammensetzung, eine Bitumenkomponente;
(c) von 0,1 bis 10 Gew.-%, bezogen auf das Gewicht der polymermodifizierten Bitumenzusammensetzung, ein Additiv, wobei das Additiv Polyphosphorsäure ist; und
(d) optional eine oder mehrere zusätzliche Komponenten;
wobei das teilweise hydrierte Blockcopolymer einen Polymerblock (A), umfassend vinylaromatische Monomereinheiten als Hauptkomponente, und einen Copolymerblock (B), umfassend konjugierte Dienmonomereinheiten und vinylaromatische Monomereinheiten, umfasst, wobei der Gehalt der vinylaromatischen Monomereinheiten in dem Blockcopolymer im Bereich von 20 bis 60 Masse-% liegt, der Gehalt des Copolymerblocks (A) in dem Blockcopolymer im Bereich von 10 bis 40 Masse-% liegt und die Hydrierungsrate von Doppelbindungen in den konjugierten Dienmonomereinheiten des Blockcopolymers im Bereich von 60 bis 90 % liegt.

2. Verwendung nach Anspruch 1, wobei das Mischen bei einer Temperatur von weniger als 180 °C erfolgt.

3. Verwendung nach Anspruch 1 oder 2, wobei das Mischen bei einer Temperatur von weniger als 170 °C erfolgt.

4. Verwendung nach einem der Ansprüche 1 bis 3, wobei das Mischen bei einer Temperatur von weniger als 165 °C erfolgt.

5. Verwendung nach einem der Ansprüche 1 bis 4, wobei das teilweise hydrierte Blockcopolymer ein gewichtsmittleres Molekulargewicht im Bereich von 50.000 bis 300.000 aufweist.

6. Verwendung nach einem der Ansprüche 1 bis 5, wobei das Blockcopolymer mindestens eine Art einer funktionellen Gruppe aufweist, die aus Hydroxylgruppen, Säureanhydridgruppen, Epoxygruppen, Aminogruppen, Amidgruppen, Silanolgruppen und Alkoxysilangruppen ausgewählt ist.

7. Verwendung nach einem der Ansprüche 1 bis 6, wobei der Gehalt von konjugierten Dienmonomereinheiten (a), die von 1,2-Bindungen und/oder 3,4-Bindungen abgeleitet sind, im Bereich von 10 bis 50 Masse-%, relativ zu dem Gesamtgehalt des konjugierten Dienmonomers des Blockcopolymers, liegt.

## Revendications

1. Utilisation d'un additif destiné à réduire le temps de préparation d'une composition de bitume modifié par un polymère partiellement hydrogéné dans un procédé qui comprend le fait de mélanger :
(a) de 0,5 à 5 % en poids, en poids de la composition de bitume modifié par un polymère, d'un copolymère séquencé partiellement hydrogéné ;
(b) de 85,0 % en poids à 99,4 % en poids, en fonction du poids total de la composition de bitume modifié par un polymère, d'un composant de bitume ;
(c) de 0,1 à 10 % en poids, en poids de la composition de bitume modifié par un polymère, d'un additif, l'additif étant de l'acide polyphosphorique ; et
(d) facultativement un ou plusieurs composants supplémentaires.
le copolymère séquencé partiellement hydrogéné comprenant une séquence polymère (A) comprenant des motifs monomères aromatiques vinyliques en guise de composant principal, et une séquence copolymère (B) comprenant des motifs monomères diéniques conjugués et des motifs monomères aromatiques vinyliques, la teneur des motifs monomères aromatiques vinyliques dans le copolymère séquencé étant dans la plage allant de 20 à 60 % en masse, la teneur de la séquence copolymère (A) dans le copolymère séquencé étant dans la plage allant de 10 à 40 % en masse et le taux d'hydrogénation de doubles liaisons dans les motifs monomères diéniques conjugués du copolymère séquencé étant dans la plage allant de 60 à 90 %.

2. Utilisation selon la revendication 1 dans laquelle le mélange se déroule à une température inférieure à 180 °C.

3. Utilisation selon la revendication 1 ou 2 dans laquelle le mélange se déroule à une température inférieure à 170 °C.

4. Utilisation selon l'une quelconque des revendications 1 à 3 dans laquelle le mélange se déroule à une température inférieure à 165 °C.

5. Utilisation selon l'une quelconque des revendications 1 à 4 dans laquelle le copolymère séquencé partiellement hydrogéné a une masse moléculaire moyenne en poids dans la plage allant de 50 000 à 300 000.

6. Utilisation selon l'une quelconque des revendications 1 à 5 dans laquelle le copolymère séquencé a au moins un type de groupe fonctionnel choisi parmi groupes hydroxyle, groupe anhydride d'acide, groupes époxy, groupes amino, groupes amide, groupes silanol et groupes alcoxysilane.

7. Utilisation selon l'une quelconque des revendications 1 à 6 dans laquelle la teneur des motifs monomères diéniques conjugués (a) dérivés de liaisons 1,2 et/ou de liaisons 3,4 est dans la plage allant de 10 à 50 % en masse par rapport à la teneur totale du monomère diénique conjugué du copolymère séquencé.
